# EUROPEAN PATENT SPECIFICATION

(11) **EP 3 725 449 B1**
(45) Date of publication and mention of the grant of the patent: **13.03.2024**
(21) Application number: 19786899.5
(22) Date of filing: 26.02.2019
(51) Int. Cl.: F16H 25/20, F16H 25/18, B23K 11/11, B23K 11/30, B23K 11/31, F16H 25/22

(54) **PRESSURIZING DEVICE, AND WELDING DEVICE**
DRUCKVORRICHTUNG UND SCHWEISSVORRICHTUNG
DISPOSITIF DE MISE SOUS PRESSION ET DISPOSITIF DE SOUDAGE

(43) Date of publication of application: 21.10.2020
(73) Proprietor: DENGENSHA TOA CO., LTD., Tama-ku Kawasaki-shi Kanagawa 214-8588 (JP)
(72) Inventor: HISADA, Yaukazu, Shiga 5203285 (JP)
(74) Representative: Simmons & Simmons LLP (Munich)
(86) International application number: PCT/JP2019/007399
(87) International publication number: WO 2020/174597

(56) References cited:
- EP-A1- 2 075 488
- WO-A1-00/10767
- JP-A- H0 910 952
- JP-A- H07 124 752
- JP-A- H07 124 752
- JP-A- 2001 200 905
- US-A1- 2004 140 294
- US-A1- 2011 232 407

## Description

### TECHNICAL FIELD

The present invention relates to a pressurizing apparatus and a welding apparatus, which are capable of converting rotary motion of a motor into linear motion to generate a pressing force required for spot welding and the like by this linear motion.

### BACKGROUND ART

Ball screw is known as a mechanism for converting rotary motion of a motor into linear motion. The ball screw includes a uniform spiral external thread formed on a shaft that is rotated by a motor, and an internal thread of a nut of a moving portion that is engaged with the external thread through steel balls. In this configuration, when the shaft rotates, the moving portion moves linearly in accordance with the linear motion of the nut. A required performance of the ball screw can be obtained, for example, by making the lead of the screw larger to increase the moving speed of the moving portion, and by making the lead of the screw smaller to increase a thrust. Because the thread is uniform, increasing the moving speed and increasing the thrust are in inverse relationship to each other.

A spot welding gun disclosed in Patent Literature Document 1 is known as a pressurizing apparatus which can improve the inverse relationship between the moving speed and the thrust of this ball screw mechanism to generate a pressurizing force. This spot welding gun includes a circular cylindrical cam having a hollow portion, and a rod fitted into the hollow portion of the circular cylindrical cam; when rotating the circular cylindrical cam by a servo motor, the rod is caused to move linearly to perform a pressurizing operation. This mechanism is achieved by a pair of ball bearings each provided at a distal end of a pin projecting from the outer circumferential surface of the rod, and a pair of spiral cam grooves each formed in the inner circumferential surface of the circular cylindrical cam, into which the respective ball bearings are fitted. When the circular cylindrical cam rotates, the cam grooves are caused to rotate in accordance with the rotation of the circular cylindrical cam, so that the ball bearings moving in the cam grooves are caused to move linearly.

Each cam groove forms an idle running section and a pressurizing section. In the idle running section, a cam groove angle (cam lead) made between a plane orthogonal to an axis of rotation and the cam groove is large, and the cam groove is inclined steeply. In contrast, in the pressurizing section, the cam groove angle is small, and the cam groove is inclined gently. In the idle running section, the rod reciprocates linearly at high speed but applies a small pressurizing force. In the pressurizing section, the rod reciprocates at low speed but applies a large pressurizing force. In other words, the rod moves faster as the cam lead becomes larger (large lead cam groove), and moves slower while applying a larger pressurizing force as the cam lead becomes smaller (small lead cam).

### CITATION LIST

### PATENT LITERATURE DOCUMENT(S)

Patent Literature Document 1: JP H07-124752A

### SUMMARY OF THE INVENTION

### TECHNICAL PROBLEM

In a conventional cam mechanism in combination of a general cam groove and a pair of rollers, if the cam lead in the idle running section and the cam lead in the pressurizing section are varied and the cam grooves are formed to extend in excess of one complete spiral turn in the pressurizing section, the stroke length will be longer. However, it is necessary that the diameter of the rollers and the width of the cam grooves be made larger so that one roller can withstand a large pressurizing force. Further, if the width of the cam groove is made larger, the pitch of the cam groove becomes larger in proportion to the increased width of the cam groove. Accordingly, it is difficult for the conventional structure to make the cam lead smaller in the pressurizing section.

Patent Literature Document 1 as described above discloses a cam groove formed to extend in a range of 90 degrees in the circumferential direction at a position corresponding to the pressurizing section. However, in order to ensure a practical stroke length (*e.g*., 30 mm) in the pressurizing section by the length of the cam groove formed in the range of 90 degrees, the cam lead inevitably becomes larger. For this reason, a large-sized motor with a large rotation torque is required to obtain a large pressurizing force.

Further, Patent Literature Document 1 discloses two cam grooves offset from each other by 180 degrees in phase in the circumferential direction of the circumferential surface of the circular cylindrical cam; in this mechanism, a load applied to the ball bearings is evenly distributed. However, it is necessary that the cam grooves be formed without intersecting each other and with the two cam grooves separated from each other by a predetermined pitch, so that in order to satisfy the above prerequisite, the cam lead becomes inevitably larger or the stroke length becomes inevitably shorter.

In view of the above, the present invention seeks to provide a pressurizing apparatus and a welding apparatus, in which the cam lead in the pressurizing section can be made smaller and simultaneously the stroke length in the pressurizing section can be made longer.

### SOLUTION TO PROBLEM

To solve the above problem, the present invention seeks to provide a pressurizing apparatus comprising: a cam member having an outer circumferential surface, in which a spiral lead cam groove is formed; a pressurizing member including a plurality of projections inserted into the lead cam groove, and configured to move along an axis of rotation of the cam member when the cam member rotates, wherein the lead cam groove consists of a large lead cam groove inclined at a first angle relative to a plane orthogonal to the axis of rotation, and a small lead cam groove inclined at a second angle that is smaller than the first angle relative to the plane orthogonal to the axis of rotation, the large lead cam groove and the small lead cam groove being continuously connected to form the lead cam groove, and wherein when the plurality of projections are inserted into the large lead cam groove, a projection located at one end side of a row comes into contact with one of two side surfaces of the large lead cam groove and a projection located at another end side of the row comes into contact with the other one of the two side surfaces of the large lead cam groove, and when the plurality of projections are inserted into the small lead cam groove, each of the plurality of projections comes into contact with at least one of one side surface and the other side surface of two side surfaces of the small lead cam groove.

### ADVANTAGEOUS EFFECTS OF THE INVENTION

According to the present invention, a pressurizing apparatus and a welding apparatus are provided, in which the cam lead in the pressurizing section can be made smaller and simultaneously the stroke length in the pressurizing section can be made longer.

### BRIEF DESCRIPTION OF THE DRAWINGS

FIG. 1 is a partly sectional side view illustrating a structure of a spot welding apparatus, to which a pressurizing apparatus according to the first embodiment of the present invention is applied.
FIG. 2 is a view illustrating a state in which two rollers are inserted into a large lead cam groove of a circular cylindrical cam of the spot welding apparatus according to the first embodiment.
FIG. 3 is a developed view of cam grooves, in which a large lead cam groove and a small lead cam groove of the circular cylindrical cam are developed in accordance with rotation angles of the circular cylindrical cam in the range of -720 to 0 to 720 degrees.
FIG. 4A is a plan view illustrating a state in which two rollers jutting out from a roller-attachment portion provided over a pressurizing shaft of the spot welding apparatus are inserted into the large lead cam groove.
FIG. 4B is a plan view illustrating a state in which the two rollers jutting out from the roller-attachment portion are inserted into the small lead cam groove.
FIG. 5 is a view illustrating a state in which the two rollers are inserted into the small lead cam groove of the circular cylindrical cam.
FIG. 6 is a side view illustrating a structure of four large lead cam grooves and a single small lead cam groove, which are formed in a circular cylindrical cam of a spot welding apparatus, to which a pressurizing apparatus according to the second embodiment of the present invention is applied; in this figure, four pairs of rollers are inserted into the large lead cam grooves and some of the rollers are exposed to view.
FIG. 7 is a side view illustrating a state in which some of the rollers are exposed to view while the four pairs of rollers are inserted into the small lead cam groove.
FIG. 8A is a plan view illustrating a state in which four pairs of rollers (each including two as a pair) jutting out from a roller-attachment portion provided over a pressurizing shaft are inserted into the four large lead cam grooves.
FIG. 8B is a plan view illustrating a state in which the four pairs of rollers are inserted into the small lead cam groove.
FIG. 9 is a developed view of cam grooves, in which the four large lead cam grooves and the single small lead cam groove that are formed in the circumferential surface of the circular cylindrical cam are developed in accordance with rotation angles of the circular cylindrical cam in the range of -1080 to 0 to 990 degrees.

### DESCRIPTION OF EMBODIMENTS

One embodiment of the present invention will be described below with reference to the drawings.

### <Structure of First embodiment>

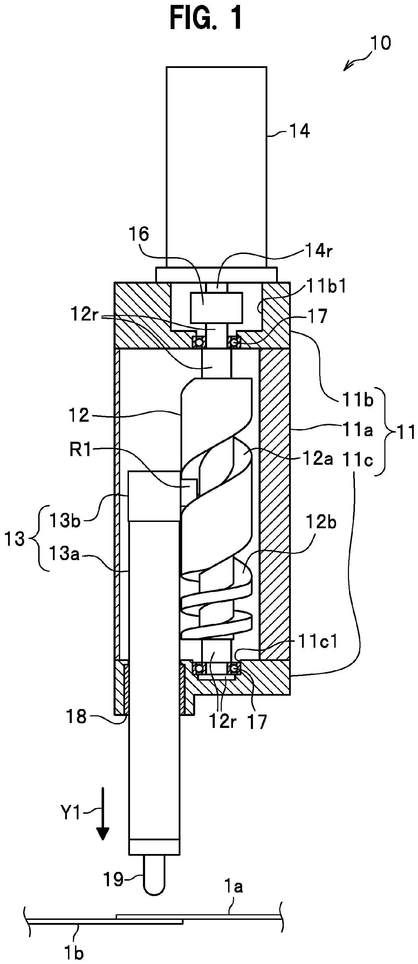

FIG. 1 is a partly sectional side view illustrating a structure of a spot welding apparatus, to which a pressurizing apparatus according to the first embodiment of the present invention is applied.

The spot welding apparatus 10 shown in FIG. 1 is configured to weld metallic material members such as a plurality of sheet metal members (workpieces) 1a, 1b having been superposed one on another while pressurizing the metallic material members under a large pressurizing force. The spot welding apparatus 10 includes a main body frame 11 in the form of a circular cylindrical box, a circular cylindrical cam (cam member) 12 embedded into the interior of the main body frame 11, a circular cylindrical pressurizing shaft (pressurizing member) 13 fitted together with the circular cylindrical cam 12, and a servo motor 14 having a rotary shaft 14r that is connected to a rotary shaft 12r of the circular cylindrical cam 12.

The main body frame 11 includes a circular cylindrical body frame 11a, an upper frame 11b disposed on an upper portion of the body frame 11a, and a lower frame 11c disposed on a lower portion of the body frame 11a.

The upper frame 11b has a circular cylindrical cavity 11b1 penetrating through the upper frame 11b in the upper-lower direction; in this cavity 11b1, a connector 16 for connecting the rotary shaft 14r of the servo motor 14 and the rotary shaft 12r of the circular cylindrical cam 12 is received. The upper frame 11b has a through hole under the cavity 11b1, and a ball bearing 17 is provided in the through hole. An upper portion of the rotary shaft 12r of the circular cylindrical cam 12 that is connected through the connector 16 is inserted into and rotatably supported by the ball bearing 17.

The lower frame 11c has a recess portion 11c1 at a position corresponding to the through hole of the upper frame 11b in the upper-lower direction, and a ball bearing 17 is provided in the recess portion 11c1. A lower portion of the rotary shaft 12r of the circular cylindrical cam 12 is inserted into and rotatably supported by the ball bearing 17. Further, the lower frame 11c has a through hole beside the recess portion 11c1, into which through hole a circular cylindrical slide bearing 18 is fitted. A circular cylindrical rod 13a of the pressurizing shaft 13 is inserted into and slidably received by the slide bearing 18.

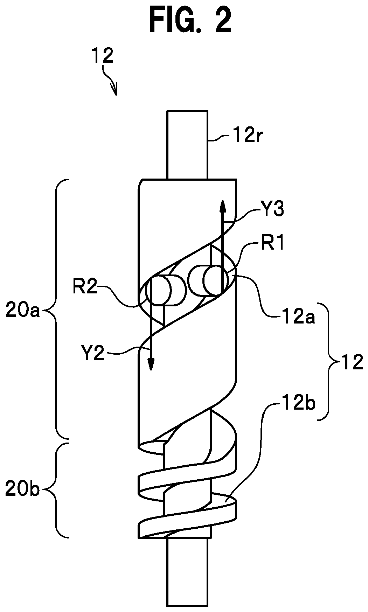

As seen in FIG. 2, the circular cylindrical cam 12 is a circular cylinder having the rotary shaft 12r, and a spiral cam groove (lead) is formed in the outer circumferential surface of the circular cylinder. The circular cylindrical cam 12 includes an idle running section 20a, in which a large lead cam groove 12a is formed (*i.e.,* a cam groove angle (cam lead) of the spiral cam groove is a first angle). Further, the circular cylindrical cam 12 includes a pressurizing section 20b under the idle running section 20a, in which a small lead cam groove 12b is formed (*i.e.,* the cam groove angle of the spiral cam groove is a second angle that is smaller than the first angle). The lead width of the large lead cam groove 12a in the upper-lower direction is wider than that of the small lead cam groove 12b. Further, the groove width of the large lead cam groove 12a is wider than that of the small lead cam groove 12b. It should, however, be noted that the first angle and the second angle are determined based on a moving speed and a pressurizing force required for the pressurizing shaft 13 to be described later. Further, the large lead cam groove 12a and the small lead cam groove 12b are continuously connected to form a lead cam groove defined in the claims.

To explain further, in the large lead cam groove 12a, the cam groove is inclined steeply at a first angle that is a steep cam groove angle larger than a predetermined angle. Meanwhile, in the small lead cam groove 12b, the cam groove is inclined gently at a second angle that is a gentle cam groove angle smaller than the predetermined angle. In a boundary portion between the large lead cam groove 12a and the small lead cam groove 12b, side surfaces of the groove have rounded corners. It should be noted that the large lead cam groove 12a and the small lead cam groove 12b are simply referred to as cam grooves 12a, 12b.

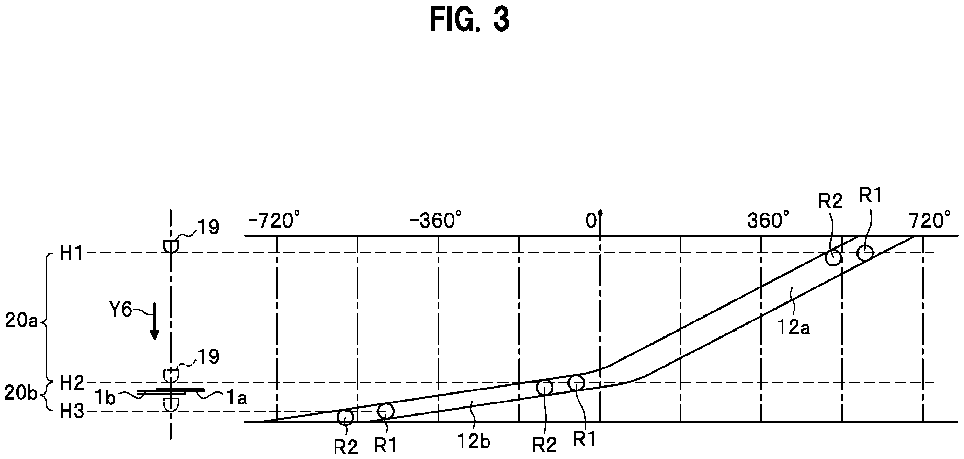

FIG. 3 is a developed view of cam grooves 12a, 12b, in which the large lead cam groove 12a and the small lead cam groove 12b formed in the circumferential surface of the circular cylindrical cam 12 are developed in accordance with rotation angles of the circular cylindrical cam 12 in the range of -720 to 0 to 720 degrees. As illustrated in the range of 0 to 720 degrees of FIG. 3, the large lead cam groove 12a makes two complete spiral turns in the outer circumferential surface of the circular cylindrical cam 12. As illustrated in the range of 0 to -720 degrees, the small lead cam groove 12b makes two complete spiral turns in the outer circumferential surface of the circular cylindrical cam 12.

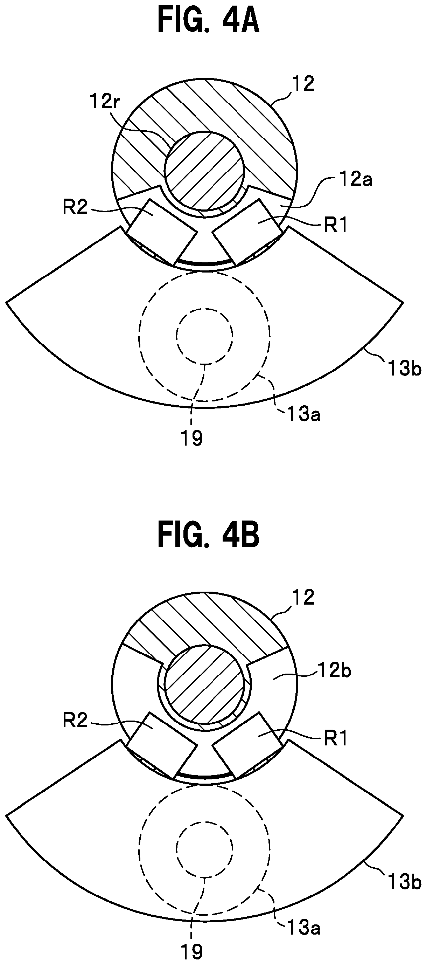

The pressurizing shaft 13 shown in FIG. 1 includes a roller-attachment portion 13b fixed to an upper end of the rod 13a. As seen in the plan view of FIG. 4A, two rollers (projections) R1, R2 that are adjacent to each other and offset in the upper-lower direction are attached to the roller-attachment portion 13b. These rollers R1, R2 are rotatably attached to shafts protruding laterally from a circular arc-shaped side surface of the roller-attachment portion 13b. The rollers R1, R2 are inserted into the large lead cam groove 12a. Further, the rollers R1, R2 are disposed such that one roller R1 is located higher than the other roller R2. Although the rollers constitute projections defined in the claims, unlike the rollers, the projections may be non-rotatable protruding portions.

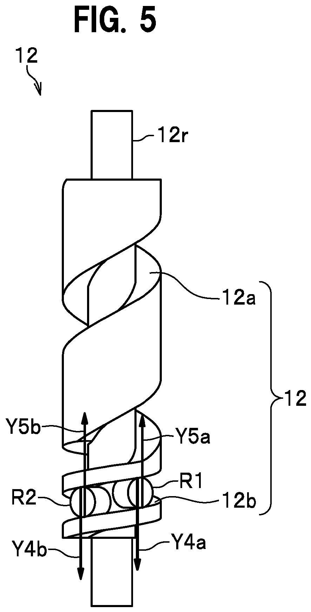

As seen in FIG. 5, when the circular cylindrical cam 12 rotates, each of the rollers R1, R2 is also inserted into the small lead cam groove 12b. The two rollers R1, R2 having been inserted into the small lead cam groove 12b are shown in the plan view of FIG. 4B. Insertion of the rollers R1, R2 into the cam groove 12a and insertion of the rod 13a into the slide bearing 18 as shown in FIG. 1 make it possible to combine the pressurizing shaft 13 and the circular cylindrical cam 12. A downwardly protruding protrusion-like welding electrode 19 is fixed to a lower end of the pressurizing shaft 13. The welding electrode 19 is configured to weld a plurality of sheet metal members 1a, 1b while pressurizing (pressing) them at a high pressure.

As seen in FIG. 2, when each of the rollers R1, R2 is inserted into the large lead cam groove 12a, the roller R1 located at an upper side (upper roller) comes into contact with the lower side surface (one side surface) of the cam groove 12a by a lower side of the circumferential surface thereof, and the roller R2 located at a lower side (lower roller) comes into contact with the upper side surface (the other side surface) of the cam groove 12a by an upper side of the circumferential surface thereof.

Further, as seen in FIG. 5, when each of the rollers R1, R2 is inserted into the small lead cam groove 12b, the roller R1 and the roller R2 come into contact with the upper side surface or the lower side surface of the cam groove 12b by their upper sides and lower sides of the circumferential surfaces.

When the circular cylindrical cam 12 rotates to the left (rotating from the left side to the right side in FIG. 2 as viewed from the front side of the figure) in accordance with the rotation of the servo motor 14 to the left (leftward rotation), the lower roller R2 in the large lead cam groove 12a is pressed downward as shown by the arrow Y2 by the upper steeply inclined surface of the cam groove 12a that is inclined at a steep angle. Each of the rollers R1, R2 moves downward by this downward pressing force (Y2). According to this downward movement of the rollers R1, R2, the pressurizing shaft 13 moves downward with the welding electrode 19 positioned at the front end in the moving direction.

In contrast, when the servo motor 14 rotates to the right (rightward rotation), the circular cylindrical cam 12 rotates to the right (rotating from the right side to the left side in FIG. 2 as viewed from the front side of the figure), so that the upper roller R1 in the large lead cam groove 12a is pressed upward as shown by the arrow Y3 by the lower steeply inclined surface of the cam groove 12a. Each of the rollers R1, R2 moves upward by this upward pressing force (Y3). According to this upward movement of the rollers R1, R2, the pressurizing shaft 13 moves upward with the welding electrode 19 positioned at the rear end in the moving direction.

Since the rollers R1, R2 are pressed by the steeply inclined surfaces of the cam groove 12a while the rollers R1, R2 move in the large lead cam groove 12a, the rollers R1, R2 move fast, and accordingly the pressurizing shaft 13 moves fast as well.

Meanwhile, when the circular cylindrical cam 12 rotates to the left while each of the rollers R1, R2 is inserted into the small lead cam groove 12b as shown in FIG. 5, the roller R1 and the roller R2 are pressed downward as shown by the arrows Y4a, Y4b by the upper gently inclined surface of the cam groove 12b that is inclined at a gentle angle. Each of the rollers R1, R2 moves downward by this downward pressing force, so that the pressurizing shaft 13 moves downward with the welding electrode 19 positioned at the front end in the moving direction.

In contrast, when the circular cylindrical cam 12 rotates to the right, the rollers R1, R2 are pressed upward as shown by the arrows Y5a, Y5b by the lower gently inclined surface of the cam groove 12b. Each of the rollers R1, R2 moves upward by this upward pressing force, so that the pressurizing shaft 13 moves upward with the welding electrode 19 positioned at the rear end in the moving direction.

Since the roller R1 and the roller R2 are pressed simultaneously by the gently inclined surface of the small lead cam groove 12b while the rollers R1, R2 move downward, the pressing force applied to the rollers R1, R2 is distributed.

### <Operation of First embodiment>

Next, description will be given to a pressurizing operation, in which a plurality of sheet metal members 1a, 1b superposed one on another are pressed and welded together using the spot welding apparatus 10, to which the pressurizing apparatus according to the first embodiment is applied.

As a precondition, it is supposed that as seen in FIG. 3, the rollers R1, R2 are inserted into the large lead cam groove 12a at the uppermost position H1 of the idle running section 20a. At this insertion position of the rollers R1, R2 into the cam groove 12a, the circular cylindrical cam 12 rotates approximately by 540 degrees. At this time, the welding electrode 19 of the pressurizing shaft 13 is located at the uppermost position.

When the circular cylindrical cam 12 rotates to the left by the leftward rotation of the servo motor 14, the lower roller R2 inserted into the large lead cam groove 12a is pressed downward (as shown by the arrow Y2 in FIG. 2) by the steeply inclined surface of the cam groove 12a and thus moves fast. Accordingly, the pressurizing shaft 13 moves fast downward, so that as seen in FIG. 3, the welding electrode 19 moves fast downward as shown by the arrow Y6.

By this fast movement, among the rollers R1, R2, the leading roller R2 located frontward in the moving direction crosses downward the boundary H2 between the large lead cam groove 12a and the small lead cam groove 12b, and then the trailing roller R1 located rearward in the moving direction reaches the boundary H2. At this position, the roller R1 and the roller R2 lie on both sides of the rotation angle of -90 degrees (-90 degrees exists between the roller R1 and the roller R2). At this position around the rotation angle of -90 degrees, the two rollers R1, R2 are inserted into the small lead cam groove 12b, and the welding electrode 19 is located at a position immediately above and adjacent to the sheet metal members 1a, 1b.

The rollers R1, R2 in this position are pressed downward simultaneously (as shown by the arrows Y4a, Y4b in FIG. 5) by the gently inclined surface of the cam groove 12b, so that the pressing force applied to the rollers R1, R2 by the gently inclined surface is distributed. In other words, a load (pressing force) applied to one roller R1 or R2 is small. However, since the side surfaces of the small lead cam groove 12b, by which the rollers R1, R2 are pressed, are gently inclined surfaces, the pressing force applied to the rollers R1, R2 by the gently inclined surfaces is larger than that applied by the steeply inclined surfaces.

Further, the rollers R1, R2 move downward, so that the welding electrode 19 presses the sheet metal members 1a, 1b by the pressurizing force equal to the load (pressing force) applied to all the rollers R1, R2 in accordance with the movement of the rollers R1, R2. During the pressurization of the welding electrode 19, the sheet metal members 1a, 1b are welded together by the welding electrode 19. When the rollers R1, R2 move further downward, the rollers R1, R2 reach the lowermost position H3 of the small lead cam groove 12b and stop.

It should be noted that the number of rollers inserted into the cam groove 12a, 12b may be three or more. For example, if the number of rollers is three, when the rollers are inserted into the large lead cam groove 12a, the roller located at one end side of a row comes into contact with the upper steeply inclined surface of the cam groove 12a by the upper side of the circumferential surface thereof, and the roller located at the other end side of the row comes into contact with the lower steeply inclined surface of the cam groove 12a by the lower side of the circumferential surface thereof. Further, in the small lead cam groove 12b, the plurality of rollers come into contact with the upper and lower surfaces of the cam groove 12b.

### <Advantageous effects of First embodiment>

As described above, the spot welding apparatus 10, to which the pressurizing apparatus according to the first embodiment is applied, includes: the circular cylindrical cam 12 having the outer circumferential surface, in which the spral lead cam groove is formed; the pressurizing shaft 13 including a plurality of rollers R1, R2 protruding therefrom and inserted into the lead cam groove, and configured to move along an axis of rotation of the circular cylindrical cam 12 when the circular cylindrical cam 12 rotates. The lead cam groove consists of the large lead cam groove 12a inclined at a first angle relative to a plane orthogonal to the rotary shaft 12r, and the small lead cam groove 12b inclined at a second angle that is smaller than the first angle relative to the plane orthogonal to the rotary shaft 12r; the large lead cam groove 12a and the small lead cam groove 12b are continuously connected to form the lead cam groove. When the plurality of rollers R1, R2 are inserted into the large lead cam groove 12a, the roller R1, R2 located at one end side of a row comes into contact with one of two side surfaces of the large lead cam groove 12a and the roller R1, R2 located at another end side of the row comes into contact with the other one of the two side surfaces of the large lead cam groove 12a, and when the plurality of rollers R1, R2 are inserted into the small lead cam groove 12b, each of the plurality of rollers R1, R2 comes into contact with at least one of the one side surface and the other side surface of the small lead cam groove 12b.

With this configuration, when the circular cylindrical cam 12 rotates in accordance with the rotation of the servo motor 14 on condition that the rotary shaft of the circular cylindrical cam 12 is coupled to a rotary shaft of the servo motor 14, the plurality of rollers R1, R2 move, for example, in the large lead cam groove 12a and then enter and move in the small lead cam groove 12b. While the rollers R1, R2 move in the large lead cam groove 12a, the roller R1, R2 located at one end side of the row is pressed by the steeply inclined surface of the large lead cam groove 12a inclined at the first angle that is steeper than the second angle. Accordingly, each of the rollers R1, R2 moves fast in a direction of the shaft, so that the pressurizing shaft 13 moves fast in the direction of the rotary shaft in accordance with the movement of the rollers R1, R2.

Meanwhile, while the rollers R1, R2 move in the small lead cam groove 12b, the plurality of rollers R1, R2 are pressed simultaneously by the gently inclined surface of the small lead cam groove 12b that is inclined at the second angle gentler than the first angle. Accordingly, the force applied to the rollers R1, R2 by the gently inclined surface is distributed. In other words, since the pressing force applied to one roller R1 or R2 becomes smaller, the size of the rollers R1, R2 can be reduced. Since the groove width and the cam ridge of the small lead cam groove 12b that are formed spirally in the circumferential surface of the circular cylindrical cam 12 are reduced in size in accordance with this downsizing of the rollers R1, R2, it is possible to reduce the size of the cam lead.

Since the pressing force applied by the gently inclined surface of the small lead cam groove 12b is distributed by the plurality of rollers R1, R2, the lead cam groove is less likely to be damaged due to the pressing force applied to the rollers R1, R2.

With this configuration, since the small lead cam groove 12b extending in excess of at least one complete spiral turn is formed in the outer circumferential surface of the circular cylindrical cam 12, the stroke length of the pressurizing section is made longer. If the cam lead is smaller in the pressurizing section, the rotation torque of the circular cylindrical cam 12 may be made smaller in accordance thereto. It is therefore possible to make the cam lead smaller in the pressurizing section and simultaneously to make the stroke length of the pressurizing section longer in the pressurizing section. Accordingly, the servo motor 14 for rotating the circular cylindrical cam 12 can be fabricated by a small-sized servo motor with a low rotation torque.

According to the technique disclosed in Patent Literature Document 1, the circular cylindrical cam 12 has a small lead cam groove (lead) with one quarter spiral turn; suppose that the lead width of this quarter cam groove in the upper-lower direction is, for example, 30 mm as a practical stroke length, the lead width becomes 120 mm for one complete turn and 240 mm for two complete turns. In contrast, according to this embodiment, suppose that the pressurizing force of a general welding gun is 5,000 N, the lead width can be 30 mm for two complete turns, so that as compared with Patent Literature Document 1, the ratio of the lead width becomes one-eighth (*i.e.,* 30 mm / 240 mm = 1/8). For this reason, according to this embodiment, a small-sized servo motor 14 with a rotation torque of one-eighth of the motor used in Patent Literature Document 1 can be used.

In the spot welding apparatus 10, to which the pressurizing apparatus is applied, various advantages, such as reducing the size of the spot welding apparatus 10, reducing the electric power consumption, and reducing the cost, can be obtained by the use of this small-sized servo motor 14.

Since the rollers R1, R2 do not receive a large load (pressurizing force) in the idle running section where a workpiece is not pressurized, among the two rollers R1, R2, only one roller R2 located at one end side comes into contact with the side surface of the large lead cam groove 12a to cause the pressurizing shaft 13 to move fast. Accordingly, the cycle time required for pressurizing a workpiece in the pressurizing process can be made shorter for instance.

### <Configuration of Second embodiment>

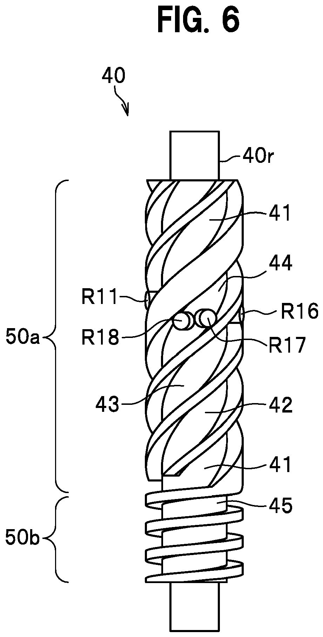

FIG. 6 is a side view illustrating a structure of four large lead cam grooves 41-44 and a single small lead cam groove 45, which are formed in a circular cylindrical cam 40 of a spot welding apparatus, to which a pressurizing apparatus according to the second embodiment of the present invention is applied; in this figure, four pairs of rollers R11-R18 are inserted into the large lead cam grooves 41-44 and some of the rollers R11, R16, R17, R18 are exposed to view.

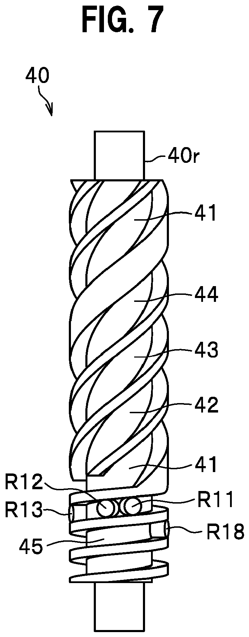

FIG. 7 is a side view illustrating the structures of the four large lead cam grooves 41-44 and the single small lead cam groove 45 as well as illustrating a state in which some of the rollers R11, R12, R13, R18 are exposed to view while the four pairs of rollers R11-R18 are inserted into the small lead cam groove 45.

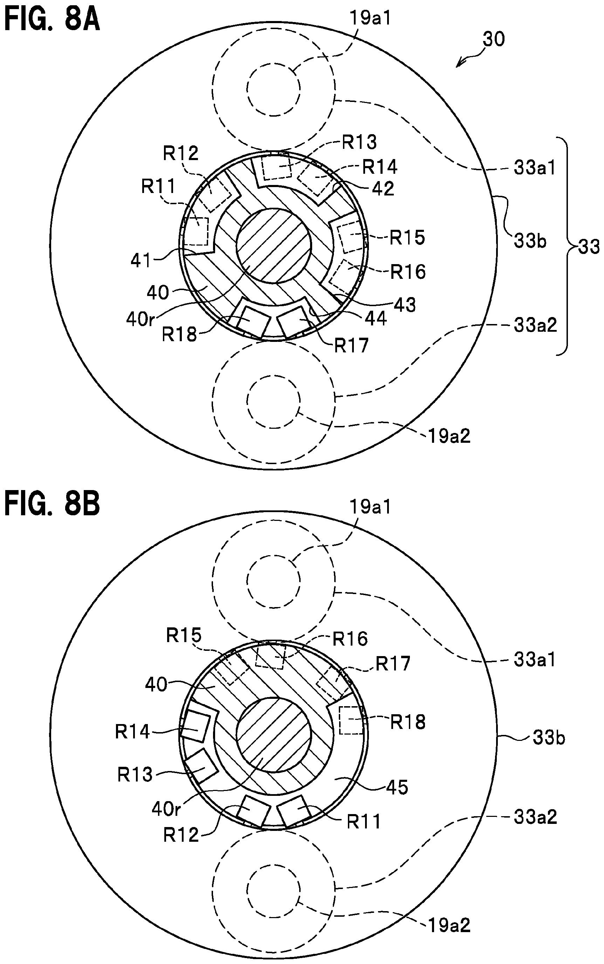

FIG. 8A is a plan view illustrating a state in which four pairs (four sets) of rollers (projections) R11, R12; R13, R14; R15, R16; R17, R18 (each including two as a pair (a set)) jutting out from the roller-attachment portion 33b provided over the pressurizing shaft 33 are inserted into the four large lead cam grooves 41, 42, 43, 44. FIG. 8B is a plan view illustrating a state in which the four pairs of rollers R11-R18 are inserted into the small lead cam groove 45. It should be noted that the large lead cam grooves 41-44 and the small lead cam groove 45 are continuously connected to form the lead cam groove defined in the claims.

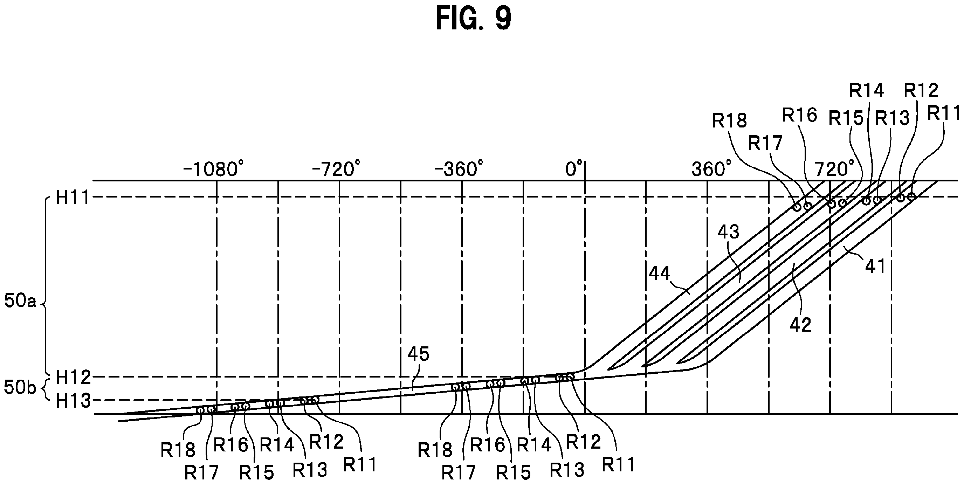

FIG. 9 is a developed view of cam grooves 41-44, 45, in which the four large lead cam grooves 41-44 and the single small lead cam groove 45 that are formed in the circumferential surface of the circular cylindrical cam (cam member) 40 are developed in accordance with rotation angles of the circular cylindrical cam 40 in the range of -1080 to 0 to 990 degrees.

The spot welding apparatus 30 according to the second embodiment and the spot welding apparatus 10 according to the first embodiment as shown in FIG. 1 are different in that the circular cylindrical cam 40 and the pressurizing shaft (pressurizing member) 33 are configured as described below.

Namely, as seen in FIG. 6, the circular cylindrical cam 40 rotatable about the rotary shaft 40r has four large lead cam grooves 41-44 (see FIG. 9) formed in the outer circumferential surface thereof at a steep angle; the four large lead cam grooves 41-44 are disposed parallel to and separated from each other. Lower ends of the cam grooves 41-44 are connected to an upper end of the single small lead cam groove 45 that is formed to be inclined at a gentle angle. A portion of the circular cylindrical cam 40 where the four large lead cam grooves 41-44 are formed is an idle running section 50a, and a portion of the circular cylindrical cam 40 where the single small lead cam groove 45 is formed is a pressurizing section 50a. At boundary portions between the large lead cam grooves 41-44 and the small lead cam groove 45, side surfaces of the grooves partly have rounded corners (see FIG. 9).

The large lead cam groove 41 is referred to as a first cam groove 41, the large lead cam groove 42 is referred to as a second cam groove 42, the large lead cam groove 43 is referred to as a third cam groove 43, and the large lead cam groove 44 is referred to as a fourth cam groove 44.

As seen in FIG. 8A, the pressurizing shaft 33 includes an annular-shaped roller-attachment portion 33b, and two rods 33a1, 33a2 protruding downward from a lower surface of the roller-attachment portion 33b and disposed opposite to each other. A protrusion-like welding electrode 19a1, 19a2 is fixed to a lower end of each of the rods 33a1, 33a2.

Four pairs of rollers R11-R18 are attached to an inner circumferential surface of the roller-attachment portion 33b such that they are arranged circumferentially at regular intervals. The rollers R11-R18 are rotatably attached to shafts each protruding from the inner circumferential surface of the roller-attachment portion 33b toward the center of the inner circle. The rollers R11-R18 are insertable into the large lead cam grooves 41-44 or the small lead cam groove 45 (see FIG. 8B).

The rollers R11-R18 are arranged on the inner circumferential surface of the roller-attachment portion 33b with height differences made therebetween such that they are aligned spirally in the large lead cam grooves 41-44 and in the small lead cam groove 45. In other words, the rollers R11-R18 are attached to the inner circumferential surface of the roller-attachment portion 33b at slant height positions such that when the rollers R11-R18 are inserted into the small lead cam groove 45 as shown in FIG. 9, the rollers R11-R18 come into contact with the upper side surface or the lower side surface of the cam groove 45. As seen in FIG. 9, the rollers R11-R18 are arranged at the same angle as the inclined angle of the small lead cam groove 12b.

In the large lead cam groove 41-44 shown in FIG. 9, a pair of rollers R11, R12 (also referred to as the first set of rollers R11, R12) located at the highest position are inserted into the first cam groove 41, and then a pair of rollers R13, R14 (also referred to as the second set of rollers R13, R14) located at the second highest position are inserted into the second cam groove 42. Further, a pair of rollers R15, R16 (also referred to as the third set of rollers R15, R16) located at the third highest position are inserted into the third cam groove 43, and then a pair of rollers R17, R18 (also referred to as the fourth set of rollers R17, R18) located at the lowest position are inserted into the fourth cam groove 44.

When the first set of rollers R11, R12 are inserted into the first cam groove 41, the roller R11 located at the upper side comes into contact with the lower side surface of the first cam groove 41 by the lower side of the circumferential surface of the roller R11 and the roller R12 located at the lower side comes into contact with the upper side surface of the first cam groove 41 by the upper side of the circumferential surface of the roller R12.

When the second set of rollers R13, R14 are inserted into the second cam groove 42, the roller R13 located at the upper side comes into contact with the lower side surface of the second cam groove 42 by the lower side of the circumferential surface of the roller R13 and the roller R14 located at the lower side comes into contact with the upper side surface of the second cam groove 42 by the upper side of the circumferential surface of the roller R14.

When the third set of rollers R15, R16 are inserted into the third cam groove 43, the roller R15 located at the upper side comes into contact with the lower side surface of the third cam groove 43 by the lower side of the circumferential surface of the roller R15 and the roller R16 located at the lower side comes into contact with the upper side surface of the third cam groove 43 by the upper side of the circumferential surface of the roller R16.

When the fourth set of rollers R17, R18 are inserted into the fourth cam groove 44, the roller R17 located at the upper side comes into contact with the lower side surface of the fourth cam groove 44 by the lower side of the circumferential surface of the roller R17 and the roller R18 located at the lower side comes into contact with the upper side surface of the fourth cam groove 44 by the upper side of the circumferential surface of the roller R18.

When the circular cylindrical cam 40 (see FIG. 6) rotates to the left, the lower rollers R12, R14, R16, R18, among the four pairs of rollers R11-R18 in the large lead cam grooves 41-44, are pressed downward simultaneously by the upper steeply inclined surfaces of the respective cam grooves 41-44. Each of the rollers R11-R18 moves downward by this downward pressing force, so that the pressurizing shaft 40 moves downward with the welding electrodes 19a1, 19a2 positioned at the front end in the moving direction.

In contrast, when the circular cylindrical cam 40 (see FIG. 6) rotates to the right, the upper rollers R11, R13, R15, R17, among the four pairs of rollers R11-R18 in the large lead cam grooves 41-44, are pressed upward by the lower steeply inclined surfaces of the respective cam grooves 41-44. Each of the rollers R11-R18 moves upward by this upward pressing force, so that the pressurizing shaft 33 moves upward with the welding electrodes 19a1, 19a2 positioned at the rear end in the moving direction.

Since the rollers R11-R18 are pressed by the steeply inclined surfaces of the cam grooves 41-44 while the rollers R11-R18 move in the large lead cam grooves 41-44, the rollers R11-R18 move fast, and accordingly the pressurizing shaft 33 moves fast as well.

Further, as seen in FIG. 9, when the plurality of rollers R11-R18 are inserted into the small lead cam groove 45, the rollers R11-R18 come into contact with the upper side surface or the lower side surface of the small lead cam groove 45 by their upper sides and lower sides of the circumferential surfaces.

When the circular cylindrical cam 40 (see FIG. 7) rotates to the left while each of the rollers R11-R18 is inserted into the small lead cam groove 45, the plurality of rollers R11-R18 are pressed downward simultaneously by the upper gently inclined surface of the cam groove 45. Each of the rollers R11-R18 moves downward by this downward pressing force, so that the pressurizing shaft 33 moves downward with the welding electrodes 19a1, 19a2 positioned at the front end in the moving direction.

Since the plurality of rollers R11-R18 (four pairs at the maximum) are pressed simultaneously by the gently inclined surface of the small lead cam groove 45 while the rollers R11-R18 move downward, the pressing force (load) applied to the rollers R11-R18 is distributed.

In contrast, when the circular cylindrical cam 40 (see FIG. 7) rotates to the right, the plurality of rollers R11-R18 (four pairs at the maximum) are pressed upward by the lower gently inclined surface of the cam groove 45. Each of the rollers R11-R18 moves upward by this upward pressing force, so that the pressurizing shaft 33 moves upward with the welding electrodes 19a1, 19a2 positioned at the rear end in the moving direction.

### <Operation of Second embodiment>

Next, description will be given to a pressurizing operation, in which a plurality of sheet metal members 1a, 1b (see FIG. 1) superposed one on another are welded together using the spot welding apparatus 30, to which the pressurizing apparatus according to the second embodiment is applied.

As a precondition, it is supposed that as seen in FIG. 9, each of the rollers R11-R18 is inserted into the corresponding large lead cam groove 41-44 at the uppermost position H11 of the idle running section 50a. At this insertion position of the rollers R11-R18 into the cam grooves 41-44, the rotation angle of the circular cylindrical cam 40 is approximately 600-990 degrees. At this time, the welding electrodes 19a1, 19a2 of the pressurizing shaft 13 are located at the uppermost position.

When the circular cylindrical cam 40 rotates to the left by the leftward rotation of the servo motor 14 (see FIG. 1), the lower rollers R12, R14, R16, R18, among the pairs of rollers R11-R18 inserted into the corresponding large lead cam grooves 41-44, are pressed downward by the upper steeply inclined surfaces of the cam grooves 41-44 and thus move fast. Accordingly, the pressurizing shaft 33 moves fast downward, so that the welding electrodes 19a1, 19a2 move fast downward as well.

By this movement, among the rollers R11-R18, the leading roller R18 located in the frontmost position in the moving direction first crosses downward the boundary H12 between the first cam groove 41 and the small lead cam groove 45, and then the trailing roller R17 located rearward of the roller R18 crosses the boundary H12 downward. Next, the third set of rollers R16, R15 cross the boundary H12 downward. Then, the second set of rollers R14, R13 cross the boundary H12 downward. After that, the first set of rollers R12, R11 move downward to reach the boundary H12. In this reaching position, the welding electrodes 19a1, 19a2 are located at a position immediately above and adjacent to the sheet metal members 1a, 1b.

The rollers R11-R18 are pressed downward simultaneously by the upper gently inclined surface of the small lead cam groove 45, so that the pressing force applied to the rollers R11-R18 by the gently incline surface is distributed. In other words, a load (pressing force) applied to one roller is small. However, since the side surfaces of the small lead cam groove 45, by which the rollers R1-R18 are pressed, are gently inclined surfaces, the pressing force applied to the rollers R11-R18 by the gently inclined surfaces is larger than that applied by the steeply inclined surfaces.

Further, the rollers R11-R18 move downward, so that the welding electrodes 19a1, 19a2 press the sheet metal members 1a, 1b by the pressurizing force equal to the load (pressing force) applied to all the rollers R11-R18 in accordance with the movement of the rollers R11-R18. During the pressurization of the welding electrodes 19a1, 19a2, the sheet metal members 1a, 1b are welded together by the welding electrode 19a1 or the welding electrode 19a2. When the rollers R11-R18 move further downward, the trailing roller R11 located at the rear end in the traveling direction reaches the lowermost position H3 of the small lead cam groove 45 and stops.

Although the above-described embodiment includes four large lead cam grooves 41-44, the number of large lead cam grooves is not limited; for example, the number of large lead cam grooves may be two or more, and plural sets of rollers, each including a plurality of rollers as a set, may be inserted into the corresponding large lead cam grooves.

### <Advantageous effects of Second embodiment>

As described above, in the spot welding apparatus 30, to which the pressurizing apparatus according to the second embodiment is applied, the lead cam groove includes four large lead cam grooves 41-44 that are branched from a single small lead cam groove 45. The pressurizing shaft 33 includes four sets of rollers R11-R18 each including two rollers. The four sets of rollers R11-R18 are inserted into the four large lead cam grooves 41-44, respectively, and all the four sets of rollers R11-R18 are inserted into the single small lead cam groove 45.

With this configuration, the four sets of rollers R11-R18 are pressed simultaneously by the gently inclined surface of the single small lead cam groove 45, the pressing force is reduced to one quarter as compared with an alternative configuration in which one set of rollers are pressed simultaneously by the gently inclined surface. In other words, since the pressing force applied to one roller is greatly reduced, the size of the rollers can be greatly reduced. Further, the cam ridge by which the reaction force of the roller is received can be reduced in width. In accordance with this downsizing of the rollers, the cam lead of the small lead cam groove 45 that is formed spirally in the outer circumferential surface of the circular cylindrical cam 40 can be reduced in size.

Since the pressing force applied by the gently inclined surface of the small lead cam groove 45 is distributed by the plurality of rollers R11-R18, the lead cam groove is less likely to be damaged due to the pressing force applied to the rollers R11-R18.

With this configuration, since the small lead cam groove 45 extending in excess of at least one complete spiral turn is formed in the outer circumferential surface of the circular cylindrical cam 40, the stroke length of the pressurizing section is made longer. If the cam lead is smaller in the pressurizing section, the rotation torque of the circular cylindrical cam 40 may be made smaller in accordance thereto. It is therefore possible to make the cam lead smaller in the pressurizing section and simultaneously to make the stroke length of the pressurizing section longer in the pressurizing section. Accordingly, the servo motor 14 for rotating the circular cylindrical cam 40 can be fabricated by a small-sized servo motor with a low rotation torque.

Various changes and/or modifications may be made where appropriate to specific configurations of the above-described embodiments without departing from the scope of the appended claims. Other than the above-described spot welding apparatus 10, 30, to which the pressurizing apparatus has been applied, the pressurizing apparatus according to the present invention is applicable to other apparatuses, such as a friction stir welding apparatus, a press working apparatus, a press-fitting apparatus, a swaging apparatus, a seam welding apparatus, and a projection welding apparatus.

### DESCRIPTION OF REFERENCE NUMERALS

1a, 1b sheet metal member
10, 30 spot welding apparatus
11 main body frame
11a body frame
11b upper frame
11b1 cavity
11c lower frame
11c1 recess portion
12, 40 circular cylindrical cam
12r, 40r rotary shaft of the circular cylindrical cam
12a, 41-44 large lead cam groove
12b, 45 small lead cam groove
13, 33 pressurizing shaft
13a, 33a1, 33a2 rod
13b, 33b roller-attachment portion
14 servo motor
14r rotary shaft of the servo motor
16 connector
17 ball bearing
18 slide bearing
19, 19a1, 19a2 welding electrode
20a, 50a idle running section
20b, 50b pressurizing section
R1, R2, R11-R18 roller

## Claims

1. A pressurizing apparatus comprising:
a cam member (12, 40) having an outer circumferential surface, in which a spiral lead cam groove (12a, 12b, 41, 42, 43, 44, 45) is formed, and
a pressurizing member (13, 33) including a plurality of projections (R1, R2, R11, R12, R13, R14, R15, R16, R17, R18) inserted into the lead cam groove (12a, 12b, 41, 42, 43, 44, 45), and configured to move along an axis of rotation of the cam member (12, 40) when the cam member (12, 40) rotates, wherein two or more projections define a row,
**characterized in that** the lead cam groove (12a, 12b, 41, 42, 43, 44, 45) consists of a large lead cam groove (12a, 41, 42, 43, 44) inclined at a first angle relative to a plane orthogonal to the axis of rotation, and a small lead cam groove (12b, 45) inclined at a second angle that is smaller than the first angle relative to the plane orthogonal to the axis of rotation, the large lead cam groove (12a, 41, 42, 43, 44) and the small lead cam groove (12b, 45) being continuously connected to form the lead cam groove (12a, 12b, 41, 42, 43, 44, 45),
and wherein the cam member and the pressurising member are so configured that,
when the plurality of projections (R1, R2, R11, R12, R13, R14, R15, R16, R17, R18) are inserted into the large lead cam groove (12a, 41, 42, 43, 44), the projection (R1, R2, R11, R12, R13, R14, R15, R16, R17, R18) located at one end side of a row comes into contact with one of two side surfaces of the large lead cam groove (12a, 41, 42, 43, 44) and the projection (R1, R2, R11, R12, R13, R14, R15, R16, R17, R18) located at another end side of the row comes into contact with the other one of the two side surfaces of the large lead cam groove (12a, 41, 42, 43, 44), and when the plurality of projections (R1, R2, R11, R12, R13, R14, R15, R16, R17, R18) are inserted into the small lead cam groove (12b, 45), each of the plurality of projections (R1, R2, R11, R12, R13, R14, R15, R16, R17, R18) comes into contact with at least one of one side surface and the other side surface of two side surfaces of the small lead cam groove (12b, 45).

2. The pressurizing apparatus according to claim 1,
wherein the lead cam groove (41, 42, 43, 44, 45) includes a plurality of large lead cam grooves (41, 42, 43, 44) that are branched from a single small lead cam groove (45),
wherein the pressurizing member (33) comprises plural sets of projections (R11, R12, R13, R14, R15, R16, R17, R18) each including the plurality of projections (R11, R12, R13, R14, R15, R16, R17, R18), and
wherein the plural sets of projections (R11, R12, R13, R14, R15, R16, R17, R18) are insertable into the plurality of large lead cam grooves (41, 42, 43, 44), respectively, and all the plural sets of projections (R11, R12, R13, R14, R15, R16, R17, R18) are insertable into the single small lead cam groove (45).

3. A welding apparatus (10, 30) comprising the pressurizing apparatus according to claim 1,
wherein the pressurizing member (13, 33) is a pressurizing electrode (19, 19a1, 19a2) configured to contact a workpiece (1a, 1b) and to pressurize a portion to be welded.

## Patentansprüche

1. Druckbeaufschlagungsgerät, umfassend:
ein Nockenbauteil (12, 40) mit einer äußeren Umfangsfläche, in der eine spiralförmige Führungsnockennut (12a, 12b, 41, 42, 43, 44, 45) ausgebildet ist, und
ein Druckbeaufschlagungsbauteil (13, 33), das eine Vielzahl an Vorsprüngen (R1, R2, R11, R12, R13, R14, R15, R16, R17, R18) enthält, die in die Führungsnockennut (12a, 12b, 41, 42, 43, 44, 45) eingesetzt sind und so konfiguriert sind, dass sie sich entlang einer Drehachse des Nockenbauteils (12, 40) bewegen, wenn sich das Nockenbauteil (12, 40) dreht, wobei zwei oder mehr Vorsprünge eine Reihe definieren,
**dadurch gekennzeichnet, dass**
die Führungsnockennut (12a, 12b, 41, 42, 43, 44, 45) aus einer großen Führungsnockennut (12a, 41, 42, 43, 44), die unter einem ersten Winkel relativ zu einer Ebene orthogonal zur Drehachse geneigt ist, und einer kleinen Führungsnockennut (12b, 45) besteht, die unter einem zweiten Winkel, welcher kleiner als der erste Winkel ist, relativ zu der Ebene orthogonal zur Drehachse geneigt ist, wobei die große Führungsnockennut (12a, 41, 42, 43, 44) und die kleine Führungsnockennut (12b, 45) kontinuierlich miteinander verbunden sind, um die Führungsnockennut (12a, 12b, 41, 42, 43, 44, 45) auszubilden,
und wobei das Nockenbauteil und das Druckbeaufschlagungsbauteil so gestaltet sind, dass dann, wenn die Vielzahl an Vorsprüngen (R1, R2, R11, R12, R13, R14, R15, R16, R17, R18) in die große Führungsnockennut (12a, 41, 42, 43, 44) eingeführt wird, der Vorsprung (R1. R2, R11, R12, R13, R14, R15, R16, R17, R18), der sich an einer Endseite einer Reihe befindet, mit einer der zwei Seitenflächen der großen Führungsnockennut (12a, 41, 42, 43, 44) in Kontakt tritt, und der Vorsprung (R1, R2, R11, R12, R13, R14, R15, R16, R17, R18), der sich an einer andere Endseite der Reihe befindet, in Kontakt mit der anderen der zwei Seitenflächen der großen Führungsnockennut (12a, 41, 42, 43, 44) tritt, und dann, wenn die Vielzahl an Vorsprüngen (R1, R2, R11, R12, R13, R14, R15, R16, R17, R18) in die kleine Führungsnockennut (12b, 45) eingeführt wird, jeder der Vielzahl an Vorsprüngen (R1, R2, R11, R12, R13, R14, R15, R16, R17, R18) mit mindestens einer von einer Seitenfläche und der anderen Seitenfläche von zwei Seitenflächen der kleinen Führungsnockennut (12b, 45) in Kontakt tritt.

2. Druckbeaufschlagungsgerät nach Anspruch 1,
wobei die Führungsnockennut (41, 42, 43, 44, 45) eine Vielzahl von großen Führungsnockennuten (41, 42, 43, 44) umfasst, die von einer einzigen kleinen Führungsnockennuten (45) abzweigen,
wobei das Druckbeaufschlagungsbauteil (33) mehrere Sätze an Vorsprüngen (R11, R12, R13, R14, R15, R16, R17, R18) aufweist, die jeweils die Vielzahl an Vorsprüngen (R11, R12, R13, R14, R15, R16, R17, R18) umfassen, und
wobei die mehreren Sätze an Vorsprüngen (R11, R12, R13, R14, R15, R16, R17, R18) jeweils in die mehreren großen Führungsnockennuten (41, 42, 43, 44) einsetzbar sind, und wobei alle der mehreren Sätze an Vorsprüngen (R11, R12, R13, R14, R15, R16, R17, R18) in die einzelne kleine Führungsnockennut (45) einsetzbar sind.

3. Schweißgerät (10, 30), umfassend das Druckbeaufschlagungsgerät nach Anspruch 1,
wobei das Druckbeaufschlagungsbauteil (13, 33) eine Druckbeaufschlagungselektrode (19, 19a1, 19a2) ist, die gestaltet ist, um mit einem Werkstück (1a, 1b) in Kontakt zu treten und einen zu schweißenden Abschnitt unter Druck zu setzen.

## Revendications

1. Appareil de pressurisation comprenant :
une came (12, 40) ayant une surface circonférentielle externe, dans laquelle une rainure de came en spirale (12a, 12b, 41, 42, 43, 44, 45) est formée, et
un élément de pressurisation (13, 33) comprenant une pluralité de saillies (R1, R2, R11, R12, R13, R14, R15, R16, R17, R18) insérées dans la rainure de came (12a, 12b, 41, 42, 43, 44, 45), et configurées pour se déplacer le long d'un axe de rotation de la came (12, 40) lorsque la came (12, 40) tourne, dans lequel deux saillies ou plus définissent une rangée,
**caractérisé en ce que**
la rainure de came (12a, 12b, 41, 42, 43, 44, 45) se compose d'une grande rainure de came (12a, 41, 42, 43, 44) inclinée à un premier angle par rapport à un plan orthogonal par rapport à l'axe de rotation, et une petite rainure de came (12b, 45) inclinée à un deuxième angle qui est inférieur au premier angle par rapport au plan orthogonal par rapport à l'axe de rotation, la grande rainure de came (12a, 41, 42, 43, 44) et la petite rainure de came (12b, 45) étant reliées en continu afin de former la rainure de came (12a, 12b, 41, 42, 43, 44, 45),
et dans lequel la came et l'élément de pressurisation sont configurés de sorte que,
lorsque la pluralité de saillies (R1, R2, R11, R12, R13, R14, R15, R16, R17, R18) est insérée dans la grande rainure de came (12a, 41, 42, 43, 44), la saillie (R1, R2, R11, R12, R13, R14, R15, R16, R17, R18) située à une extrémité d'une rangée entre en contact avec l'une des deux surfaces latérales de la grande rainure de came (12a, 41, 42, 43, 44) et la saillie (R1, R2, R11, R12, R13, R14, R15, R16, R17, R18) située à une autre extrémité de la rangée entre en contact avec l'autre des deux surfaces latérales de la grande rainure de came (12a, 41, 42, 43, 44), et, lorsque la pluralité de saillies (R1, R2, R11, R12, R13, R14, R15, R16, R17, R18) est insérée dans la petite rainure de came (12b, 45), chacune de la pluralité de saillies (R1, R2, R11, R12, R13, R14, R15, R16, R17, R18) entre en contact avec au moins l'une de la surface latérale et de l'autre surface latérale des deux surfaces latérales de la petite rainure de came (12b, 45).

2. Appareil de pressurisation selon la revendication 1,
dans lequel la rainure de came (41, 42, 43, 44, 45) comprend une pluralité de grandes rainures de came (41, 42, 43, 44) qui sont dérivées d'une seule petite rainure de came (45),
dans lequel l'élément de pressurisation (33) comprend plusieurs groupes de saillies (R1, R2, R11, R12, R13, R14, R15, R16, R17, R18) comprenant chacun la pluralité de saillies (R1, R2, R11, R12, R13, R14, R15, R16, R17, R18), et
dans lequel les groupes de saillies (R1, R2, R11, R12, R13, R14, R15, R16, R17, R18) peuvent être insérés dans la pluralité de grandes rainures de came (41, 42, 43, 44), respectivement, et tous les groupes de saillies (R1, R2, R11, R12, R13, R14, R15, R16, R17, R18) peuvent être insérés dans la petite rainure de came (45).

3. Appareil de soudage (10, 30) comprenant l'appareil de pressurisation selon la revendication 1,
dans lequel l'élément de pressurisation (13, 33) est une électrode de pressurisation (19, 19a1, 19a2) configurée pour entrer en contact avec une pièce (1a, 1b) et pour pressuriser une partie à souder.
